# EUROPEAN PATENT APPLICATION

(11) **EP 3 660 756 A1**
(43) Date of publication of application: **03.06.2020**
(21) Application number: 18209382.3
(22) Date of filing: 30.11.2018
(51) Int. Cl.: G06Q 10/00, G06Q 10/08

(54) **COMPUTER IMPLEMENTED METHOD FOR SECURE MAINTENANCE OF AT LEAST ONE REFRACTORY METAL COMPONENT OF A PROCESSING EQUIPMENT, MOBILE MAINTENANCE DEVICE AND COMPUTER PROGRAM PRODUCT**

(71) Applicant: Plansee SE, 6600 Reutte (AT)
(72) Inventor: MARK, Michael, 6600 Reutte (AT); HALLER, Andreas, 6600 Reutte (AT); MALLAUN, Peter, 6600 Reutte (AT)
(74) Representative: Müller-Boré & Partner Patentanwälte PartG mbB

(57) **Abstract**

Summarizing the application relates to a computer implemented method for secure maintenance of at least one refractory metal component (39) of a processing equipment (35) comprising the steps:
- starting a guided maintenance interface on a maintenance device (10);
- obtaining at the guided maintenance interface at least one image (34) comprising the at least one refractory metal component (39);
- irreversibly editing through the guided maintenance interface the at least one image (34) by rendering a portion of the image (34) irrecognizable;
- forwarding by the guided maintenance interface, maintenance request data including the at least one irreversibly edited image (34) to a data repository remote from the maintenance device;
- processing the forwarded irreversibly edited image (34) through a service interface to identify a condition associated with the at least one refractory metal component (39);
- depending on the identified condition, initiating a maintenance action associated with the at least one refractory metal component (39) as well as a mobile maintenance device and computer program product.

## Description

The present application relates to a computer implemented method for secure maintenance of at least one refractory metal component of a processing equipment, a mobile maintenance device, and a computer program product.

Processing equipment comprising refractory metal components is very often used for processes requiring hostile processing parameters, such as high temperatures and/or aggressive working environments and/or if the components used need to have increased resistance against wear. Such hostile processing parameters may occur in furnaces and/or when utilizing furnace equipment, industrial coating equipment, for carrying out e.g. sputtering, plasma creation processes, vapour deposition processes, etching processes and the like.

In an industrial application of such processing equipment, due to the high temperatures and/or aggressive environment, there is a need for increased monitoring or maintenance of such processing equipment. Furthermore, since such processing equipment very often is utilized in larger industrial processing lines, avoiding any downtime of such processing equipment is crucial. Therefore, increased maintenance of such processing equipment during operation of the processing equipment with little to no downtime is desired. However, since during use of the processing equipment, very often confidential or classified components are produced or processed, maintenance access to such processing equipment is restricted. Hence, there exists a problem of the necessity to provide improved maintenance of processing equipment comprising at least one refractory metal component with limited access to such processing equipment.

This problem is solved by the subject-matter of the independent claims. Preferred embodiments are subject to the dependent claims.

One aspect of the present invention relates to a computer implemented method for secure maintenance of at least one refractory metal component of a processing equipment comprising the steps:
- starting a guided maintenance interface on a maintenance device;
- obtaining at the guided maintenance interface at least one image comprising the at least one refractory metal component;
- irreversibly editing through the guided maintenance interface the at least one image by rendering a portion of the image irrecognizable;
- forwarding by the guided maintenance interface, maintenance request data including the at least one irreversibly edited image to a data repository remote from the maintenance device;
- processing the forwarded irreversibly edited image through a service interface to identify a condition associated with the at least one refractory metal component;
- depending on the identified condition, initiating a maintenance action associated with the at least one refractory metal component.

Advantageously, a third party user utilizing the service interface, that is a person different to the user of the guided maintenance interface, can assess the situation through the service interface, specifically process the forwarded image, without the image disclosing any classified parts, that are e.g. processed by the processing equipment. In other words, by use of irreversibly editing the image, a portion of the image can be rendered irrecognizable, which is not of importance or at least not crucial for the assessment of any maintenance action being necessary or in the assessment of which maintenance action is necessary.

Therefore, advantageously, it is possible to provide maintenance of a refractory metal component of a processing equipment and/or to provide maintenance of the processing equipment itself, specifically from remote of the location of the processing equipment. Further advantageously, it is possible to provide maintenance without the necessity to disassemble the processing equipment, specifically without the necessity to disassemble the refractory metal component from the processing equipment. It is also not necessary to, for example, remove any product being processed in the processing equipment from the processing equipment when carrying out the above described method. In other words, the above described method provides the advantage to provide secure maintenance of at least one refractory metal component for processing equipment with little or even no disturbance of an ongoing industrial process.

Depending, e.g. on the size and/or the location and/or the utilization, etc. of the refractory metal component and/or the processing equipment, it may be possible to provide the image during ongoing production. Further advantageously, it is not necessary that a third party user, such as an external service technician, needs to be on site of the processing equipment. Rather, through processing the irreversibly edited image, a condition of the at least one refractory metal component or processing equipment can be identified from remote and the necessary maintenance action can be initiated quickly.

In view of the above, the term maintenance, as used in this application, can comprise repair, providing support, keeping in proper condition, communication and the like.

Moreover, the term maintenance interface as used in this application, can relate to a graphical user interface (GUI) specifically the maintenance interface can comprise a GUI that is run on and/or executed by the maintenance device. The maintenance interface can also be a software application or part of a software application and the front end of the maintenance interface can be a GUI.

The guided maintenance interface as described in this application comprises - in use - a number of mandatory steps a user of the guided maintenance interface has to carry out when utilizing the guided maintenance interface, e.g. to forward maintenance request data. As a result, advantageously, the man machine interaction is improved, due to the mandatory steps, such as use of dedicated input fields, mandatory input data is provided. In addition, further advantageously, a user is guided through the graphical interface, thereby easing communication, e.g. with a service interface, that is with a technical support member using the service interface. By providing the guided maintenance interface, reliable data exchange of the maintenance data is assured and, thus, maintenance is improved.

The maintenance device can be a mobile device, such as tablet, a smartphone, a laptop computer, or any mobile device, that can utilize a software application, specifically a software application dedicated for the device. However, the maintenance device can also be a desktop computer and the maintenance interface can be part of a software application running on a desktop computer.

The guided maintenance interface can be part of a dedicated application (often referred to as app) running on the maintenance device. The guided maintenance interface can be a graphical user interface embedded in or utilized by a conventional Internet/web browser that may be commercially available, such as the Chrome browser developed by Google LLC., the Edge browser developed by Microsoft Corporation, the Internet Explorer developed by Microsoft Corporation, Firefox developed by Mozilla Foundation, Opera developed by Opera Software AS or the like. The guided maintenance interface can be part of or utilized by a web application.

In view of the above, depending on the level of maintenance provided, the guided maintenance interface can also be referred to as a guided communication interface or a guided support interface.

The term guided maintenance interface, as used in this application, is understood as e.g. a structured maintenance interface or an ordered maintenance interface. In other words, the guided maintenance interface comprises a number of compulsory steps, that the user, when utilizing the guided maintenance interface has to carry out in an ordered manner, that means subsequent order. Specifically, the above-mentioned steps have to be carried out in this order, without the user being able to deviate from the order without aborting the method. In other words, the guided maintenance interface guides the user through a number of subsequent steps.

The term data repository remote from the maintenance device as used in this application can be understood as a data repository provided e.g. as a cloud service or by a cloud service provider. The data repository can be accessed through the Internet, e.g. by use of a dedicated IP address, by accessing a specific server, or any other conventionally known means. In other words, the irreversibly edited image is sent e.g. to a cloud storage, such as a virtual drive accessible through the Internet. The irreversibly edited image is not sent to a data repository located on the maintenance device or a data repository within the local network, the maintenance device may be part of. The data repository may be a or may be part of or provided by a commercial file hosting service. Examples of such conventionally available, commercial data repositories that are remote from the maintenance device can be, without limitation, Microsoft Share Point provided by the company Microsoft, Dropbox operated by the company Dropbox Inc., iCloud provided by the company Appel Inc., etc.

The term irreversibly editing as used in this application, can be understood as changing the image in a way, that the change cannot be undone. Specifically, the change cannot be undone by reverse engineering using conventional means in a reasonable amount of time. Advantageously, by irreversibly editing, it is possible to discard portions or parts of the original image, that should not be visible to any user of the service interface or any other person obtaining the irreversibly edited image from the guided maintenance interface.

The term condition as used in this application can be understood as comprising a state of being broken and/or a state of malfunction and/or a state of operation and/or a state of wear and/or a state of proper or improper assembly, etc. and/or as used later in this document. The condition associated with the refractory metal component may also be defined by the incomplete knowledge of the user of the service device e.g. how the refractory metal component has to be deployed and/or utilized and/or arranged in the processing equipment. The condition associated with the refractory metal component may also comprise the need for consulting by the user of the service interface. Therefore, the maintenance action may comprise or be consulting advice provided with respect to the maintenance request. In other words, the maintenance request may be resolved by providing the consulting advice as one example of maintenance action.

The term maintenance action as used in this application can comprise, for example instructions of repair and/or instructions of assembly and/or instructions to exchange specific parts, etc. The term maintenance action may also comprise instructions confirming that processing equipment and/or the refractory metal component is/are sufficiently operational. The maintenance action may comprise or be consulting advice.

The refractory metal components may consist of metals based on one or more of the following elements: Niobium, tantalum, chromium, molybdenum, tungsten, and/or rhenium. A refractory metal alloy may be an alloy having a refractory metal content of more than 50 atomic percentage (at.%). Preferred embodiments of a refractory metal alloy comprise of metals or molybdenum and tungsten. The term refractory metal component as used in this application relates to components made of refractory metals or refractory metal alloys.

Preferably, the processing equipment is a thermal processing equipment, further preferably an (ultra) high temperature thermal processing equipment.

According to a preferred embodiment of the invention the method comprises the additional step of obtaining, at the guided maintenance interface, a specifier associated with the at least one refractory metal component of the processing equipment.

Advantageously, the specifier allows to recognize or even identify the refractory metal component. Alternatively or in addition, the specifier allows to recognize or even identify the processing equipment. In other words, the specifier can also be referred to as an identifier for identifying the at least one refractory metal component and/or the processing equipment. As an example, the specifier can be or comprise one or more of an identification number and/or a barcode and/or a name and/or a serial number etc. of one or more of the refractory metal components and/or the processing equipment.

According to a preferred embodiment of the invention the step of obtaining the at least one image comprising the at least one refractory metal component and/or the step of irreversibly editing the at least one image, and/or the step of obtaining the specifier is/are carried out manually by a user of the maintenance device.

Advantageously, the image can be captured, uploaded, etc. by the user of the maintenance device. The user may edit the at least one image through the maintenance interface, specifically through the guided maintenance interface. In doing so, the user may use a touch screen and/or an electronic pointing device in order to edit the at least one image. The user may enter the specifier using a touch screen and/or a keyboard of the maintenance device. As an alternative, the specifier may be obtained from the image using automatic image processing. As an example, the specifier may be obtained from a bar code and/or a QR code that can be part of the image or that may be scanned using the maintenance device. As an alternative or in addition, the specifier may be obtained through the guided maintenance interface by utilizing an RFID module, specifically an RFID reader of the maintenance device and/or an NFC module, specifically and NFC reader of the maintenance device.

According to a preferred embodiment of the invention the at least one image is obtained by a camera module of the maintenance device and the at least one image is temporarily stored in a dedicated memory of the maintenance device, more preferably, the at least one irreversibly edited image is temporarily stored in the dedicated memory.

Advantageously, the user may utilize a camera module of the maintenance device, i.e. a camera module of a mobile phone, a tablet, etc., in order to capture one or more images of one of the refractory metal components and/or the processing equipment. The image may be stored in a dedicated memory of the maintenance device. The image may be stored automatically by the guided maintenance interface in the dedicated memory of the maintenance device. The dedicated memory may be volatile memory of the maintenance device.

As an example, the guided maintenance interface may access the camera module. In other words, the camera module may be triggered or executed and controlled through the guided maintenance interface. When capturing an image by the guided maintenance interface relying on the camera module, that image may be stored in volatile memory of the maintenance device, that is the image may be stored in volatile memory of the maintenance device associated with the camera module. Thus, this memory could also be referred to as associated to the guided maintenance interface. The image may be exclusively stored in the volatile memory related to the camera module. In other words, according to a preferred embodiment of the invention, the image may be stored in the cache of the camera module.

Preferably, editing the image comprises addressing the volatile memory, in which the image is stored and altering the data stored in this volatile memory. Further preferably, also the edited image is stored in the same volatile memory. Further preferably, the image and the edited image are exclusively stored in the volatile memory. In other words, for this application, the term image refers to the file that is stored in volatile memory. The term edited image refers to the same file being stored in the same memory after manipulating the file. Hence, the term image and edited image or irreversibly edited image relate to the same file, specifically the same image, but at a different processing step that is at a different processing time.

Therefore, the step of storing the image may be carried out before the step of irreversibly editing of the image.

Considering the description above, the step of irreversibly editing may consist of irreversibly editing, through the guide of maintenance interface, the at least one image stored in the dedicated memory by rendering a portion of the image irrecognizable.

Preferably, the image and the irreversibly edited image are exclusively stored in the volatile memory of camera module. In other words, no copy of the image and/or the irreversibly edited image accessible by any other device or application on the maintenance device is stored. Thus, the maintenance device is free of any copy of the image and/or the irreversibly edited image.

Preferably the steps of obtaining the at least one image, storing the at least one image, irreversibly editing the at least one image and forwarding the maintenance request data through the data repository are, in this order, indispensible steps implemented in the guided maintenance interface.

In other words, without aborting the method, the method cannot be completed without carrying out every of the above steps in the order indicated. More preferably, without aborting the method, the method cannot be completed without carrying out at least every of the above steps in the order indicated.

Preferably the steps of obtaining the specifier, obtaining the at least one image, storing the at least one image, irreversibly editing the at least one image and forwarding the maintenance request data through the data repository are, in this order, indispensible steps implemented in the guided maintenance interface.

In other words, without aborting the method, the method cannot be completed without carrying out every of the above steps in the order indicated. More preferably, without aborting the method, the method cannot be completed without carrying out at least every of the above steps in the order indicated.

According to a preferred embodiment of the invention, the step of irreversibly editing the image comprises rendering classified elements irrecognizable. Rendering the classified elements irrecognizable may comprise replacing the pixels constituting the elements in the image by pixels of a given color, such as black, or red or any other given color, and/or by pixels of random color and/or random brightness. In other words, rendering the classified elements irrecognizable may comprise blackening out the classified elements completely or partially and/or blurring the classified elements completely or partially.

Preferably, the at least when irreversibly edited image includes only the at least one refractory metal component and/or only the processing equipment.

Preferably the maintenance request data may comprise, in addition to the at least one irreversibly edited image, at least one unedited image, wherein the at least one unedited image is free of classified elements. In other words, the maintenance request data may comprise an image that only contains the one or more refractory metal components and/or the processing equipment without showing e.g. any product that is processed in a processing equipment.

Preferably the image covers the complete processing equipment.

According to a preferred embodiment of the invention, the maintenance request data are forwarded to the data repository via an encrypted connection and/or utilizing an encrypted method and/or utilizing encrypted data that is the maintenance request data itself may be encrypted. Advantageously, by doing so, the security level is even further increased. For one, the image, that is the irreversibly edited image, does not contain any classified information. In addition, according to this embodiment, the image is not sent as it is but it is sent in an encrypted fashion. This may comprise that the image is encrypted first and forwarded after being encrypted. In addition or as an alternative, the connection may be encrypted, that is the connection may rely on an encrypted protocol as one example.

Preferably, before forwarding the maintenance data or even more preferably, before encrypting the maintenance request data, the maintenance request data are packaged as one or more data packages. In other words, the maintenance request data may include one or more irreversibly edited image(s) comprising the at least one refractory metal component and/or the processing equipment, optionally one or more unedited image comprising the at least one refractory metal component and/or the processing equipment, the specifier associated with the at least one refractory metal component and/or associated with the processing equipment, and/or an identification string such as an identification number of the maintenance request and/or an identification string such as an identification number of the maintenance device that may be an IP number, a MAC number or the like of the maintenance device. These individual data elements may be packaged to one data package. This data package may be forwarded using an encrypted connection. In addition or as an alternative, this data package, i.e. the maintenance request data, may first be encrypted and then forwarded to the data repository.

In order to enhance security when forwarding the maintenance request data, a secure connection can be used, e.g. relying on a conventionally known protocol, such as "https". Thereby batch-processing can be utilized, wherein one or more of the received data are merged, separated into individual packets, sent, and reassembled upon receipt, e.g. at the data repository or by the service interface.

According to a preferred embodiment of the invention, the step of forwarding the maintenance request data is indispensably executed upon closing the guided maintenance interface and/or the step of forwarding the maintenance request data is indispensably executed upon a user executed command.

Advantageously, when closing the maintenance interface and/or the application hosting the maintenance interface, the maintenance request data is automatically forwarded through the data repository. Optionally, should such forwarding not be possible, the maintenance interface may be hindered from closing and, optionally, an alert message may be provided.

It may also be possible that the maintenance interface allows a user to execute a command of forwarding the maintenance request data. The maintenance interface may provide a dedicated virtual button or comparable conventionally known means for allowing user interaction to execute the command.

Preferably, the method comprises the indispensable step of deleting the at least one irreversibly edited image upon or after forwarding the maintenance request data and/or upon closing the maintenance interface and/or upon a user executed command.

The term "upon" as used in this application may be understood to comprise in close timely relationship, at the same time or substantially at the same time. In this application the term "upon" may be used as a synonym to "when".

Advantageously, the security of the method is further increased or even maximised, since the image and the irreversibly edited image are only temporarily stored on the maintenance device. Specifically, security is enhanced, since according to the preferred embodiment, the image is deleted at the latest at the time the maintenance interface is closed. In addition, the maintenance interface may comprise a virtual button or other conventionally known means that allows the user of the maintenance interface to execute a deletion command for deleting the image and/or the irreversibly edited image. According to a preferred embodiment, the image and/or the irreversibly edited image (specifically all of the images) are deleted, upon forwarding the maintenance request data to the data repository.

Images that are captured by the camera module are maintained in the camera cache. Capturing the image may be connected to also obtaining the specifier and/or an identification string such as an identification number of the maintenance request and/or an identification string such as an identification number of the maintenance device that may be an IP number, a MAC number or the like of the maintenance device as additional data.

Editing the image to obtain the irreversibly edited image is done directly in the camera cache. In other words, no additional copy of the image is created, when editing the image. Advantageously, security is improved since it is assured that the images are no longer available in the camera cache when concluding the maintenance method. That is, when forwarding the maintenance request data and/or closing the maintenance interface, the camera cache will be deleted by a separate delete call. The delete call may be automatically initiated when forwarding the maintenance request data and/or when closing the maintenance interface and/or when concluding the method. There may be a dedicated virtual button or the like to initiate the delete call.

According to a preferred embodiment, all the images, that is any edited or unedited images that are obtained through the guided maintenance interface may be deleted from the camera cache upon conclusion of the maintenance method or upon executing a delete call.

As an alternative, it is possible that all unedited images are deleted from the camera cache (if any unedited images are in the cache) and all the edited images are maintained in the cache or are copied from or even moved to the dedicated database mentioned in this application.

Conclusion of the maintenance method as used in this application is understood to comprise e.g. leaving the guided maintenance interface, closing the guided maintenance interface, closing the application running or hosting or providing the guided maintenance interface, stopping the application running or hosting or providing the guided maintenance interface or the like.

According to a preferred embodiment of the invention, the condition that is identified when processing the irreversibly edited image, comprises a defect of the at least one refractory metal component and/or a defect of the processing equipment. According to a preferred embodiment, the condition may comprise a state of the at least one refractory metal component and/or a state of the processing equipment. The state may, for example, relate to the degree of wear of the refractory metal component.

Further examples of a condition may comprise: deformation of the at least one refractory metal component, color and/or color deviation and/or color gradient of the at least one refractory metal component, depositions on the at least one refractory metal component, power consumption of the processing equipment, quality of products processed with and/or in the processing equipment, and/or other unusual observations concerning the at least one refractory metal component and/or the processing equipment.

As mentioned earlier in this document, the condition associated with the refractory metal component may also be defined by the incomplete knowledge of the user of the service device e.g. how the refractory metal component has to be deployed and/or utilized and/or arranged in the processing equipment. The condition associated with the refractory metal component may also comprise the need for consulting by the user of the service interface. Therefore, the maintenance action may comprise or be consulting advice provided with respect to the maintenance request. In other words, the maintenance request may be resolved by providing the consulting advice as one example of maintenance action.

According to a preferred embodiment of the invention, the method comprises the step of receiving, at the maintenance device, maintenance response data including instructions associated with the maintenance action, wherein optionally the maintenance action comprises a corrective action for the at least one refractory metal component and/or a corrective action for the processing equipment.

As an alternative, or in addition to receiving a corrective action, the maintenance action may comprise or consist of a message. The message may concern the state of at least one refractory metal component and/or the state of the processing equipment. The message may be or comprise an indication that the at least one refractory metal component and/or the processing equipment is properly working. Specifically, the message may convey to the user of the maintenance interface, the information that no defect is present.

As an alternative, the maintenance instructions may provide instructions to the user of the maintenance interface, how to solve a problem, specifically how to repair the device, arrange and/or assemble e.g. the refractory metal components in the processing equipment, etc.

Specifically, the maintenance response data may provide instructions to the user of the maintenance device to carry out the maintenance of the at least one, specifically all of the refractory metal components and/or the processing equipment.

The maintenance action may also comprise recommendations or even instructions how to initiate/start up the processing equipment, e.g. upon exchange of one or more, specifically all of the refractory metal components, after repair of one or more, specifically all of the refractory metal components and/or of the repair of the processing equipment itself etc.

According to a preferred embodiment of the invention, the at least one image is edited by overwriting, in the dedicated memory, the source code of the image.

In other words, according to this embodiment, the image file that is preferably stored in the volatile memory of the maintenance device, is accessed by the maintenance interface and the binary code of the image is changed by the maintenance interface. Thereby, the editing of the image is irreversible. Contrary to conventional prior art techniques which enable an image to be reversibly edited by applying the edits to a separate layer of the image data and keeping said layer and, potentially, changing or even undoing this layer, the claimed invention provides for irreversibly editing the image by altering the source code. In other words, in contrast to the claimed irreversible editing, an image may be reversibly edited using conventional techniques by applying the edits in a separate layer of the image data and keeping the separate layer.

In other words, the maintenance interface may comprise an editor or an editing functionality, which can be used to edit the image. For editing the image, the image is available in the editor's background. According to one example, by editing a so-called canvas is overlaid. Editing is being done in the canvas (layer). This information, i.e. the image being the background as well as the canvas that is being edited, are then merged to one image again, wherein for individual pixels, e.g. all pixels or at least the edited pixels, the color value is/are overwritten by the new color value being the combined color value of the canvas and the background.

In other words, an image is an array of individual pixels, wherein each pixel is the smallest addressable unit in the image array. For each pixel a color value is provided. Conventionally, three values, namely red, green, blue, are used for any color. Using canvas mapping, for each pixel that may correspond to a color in the image, a new color value is obtained. The new color value is entered and saved in the file. Preferably, the color value is either black or red. However, any other color might be possible.

Specifically, in color images pixels are used such that one value for red, one value for green and one value for blue is provided for each pixel. According to one example of irreversible image editing, the edited pixels could obtain the color values (0,0,0) such that the edited pixels are rendered black. As an alternative, the edited pixels could obtain the color value (255,0,0) thus rendering the edited pixels red.

According to a preferred embodiment of the invention, through the service interface, the at least one refractory metal component and/or the processing equipment is identified and/or the identity of the at least one refractory metal component and/or the processing equipment is confirmed.

In other words, for example using the specifier, the refractory metal component can be looked up, e.g. in a table comprising the refractory metal components as used or sold by a company, such as the manufacturer of the refractory metal components or the manufacturer of the processing equipment. This can be done by utilizing a specific ID for each refractory metal component. As an alternative or in addition, processing equipment could be identified from such a table. As an alternative or additionally, the identity could be obtained automatically, wherein the service interface could rely on the specifier provided and compare the specifier with an inventory that can be accessed through the service interface.

In addition or as an alternative, using the specifier and the image data provided, it could be verified, either by machine processing or by a user of the service interface, whether the identifier and the at least one refractory metal component shown in the irreversibly edited image and/or the identifier and the processing equipment shown in the irreversibly edited image match.

In case of a match, the further steps, in particular providing maintenance response data may be initiated. In case of a no match, a message, specifically a warning could be provided to the maintenance interface as the maintenance response data.

Preferably the service interface is accessed from a manufacturer of at least one refractory metal component and/or from a manufacturer of the processing equipment. In other words, the service interface may be accessed from the manufacturer of the at least one refractory metal component and, further preferably, the service interface may have access to the inventory of the manufacturer. The service interface may be part of an ERP system of the manufacturer. The Enterprise Resource Planning (ERP) system of the manufacturer may have a common interface with the service interface.

The service interface can be part of a dedicated application (often referred to as app) running remote from the maintenance device. The service interface can be a graphical user interface embedded in or utilized by a conventional Internet/web browser that may be commercially available such as the Chrome browser developed by Google LLC., the Edge browser developed by Microsoft Corporation, the Internet Explorer developed by Microsoft Corporation, Firefox developed by Mozilla Foundation, Opera developed by Opera Software AS or the like. The service interface can be part of or utilized by a web application.

Preferably, the data repository may be hosted by a manufacturer of the at least one refractory metal component and/or by a manufacturer of the processing equipment. As an alternative, the data repository may be hosted by a third party, such as a cloud service provider, and the manufacturer may have access to the repository. The manufacturer may have exclusive access to the repository. As an alternative or in addition, the repository may push data, such as the maintenance request data, from the repository to the manufacturer of the refractory metal component and/or the manufacturer of the processing equipment.

In view of the above, as an alternative, the service interface may be accessed by a service provider and/or a distributor and/or a sub-contractor, etc. authorized to do so by the manufacturer of the refractory metal component and/or the manufacturer of the processing equipment.

According to a preferred embodiment of the invention, the method further comprises the steps of obtaining, through the guided maintenance interface, additional data associated with the image, wherein the additional data is textual data and/or voice recorded data, specifically wherein the additional data is free of any image data and/or moving data and/or data showing classified elements and wherein the maintenance request data include the additional data.

In other words, the maintenance interface allows the use of the maintenance interface to enhance the maintenance request data. Specifically, the user may provide additional comments. Such comments could be provided as textual data entered by the user e.g. directly typing on a touch screen, using an input/output device, etc. In order to further increase usability of the maintenance interface, the user could record a message using the maintenance interface and the recorded data could be part of the package that is the maintenance request data that is forwarded to the data repository. Advantageously, the additional data cannot be video data, such that security is enhanced, since it is avoided that confidential/classified information is visualized. Further, advantageously, the only means for providing image data which could also be video still image data is through the maintenance interface in the above-mentioned dedicated step of obtaining the image and editing the image.

According to a preferred embodiment of the invention, if a data connection between the maintenance device and the data repository is interrupted at time of executing the step of forwarding the maintenance request data, the maintenance request data is automatically forwarded, as soon as the data connection between the maintenance device and the data repository is reestablished and wherein, optionally, the maintenance request data is encrypted and temporarily stored in the memory of the maintenance device.

In other words, either when executing the forwarding, or when closing the maintenance interface, the maintenance interface attempts to forward the maintenance request data. If such forwarding of the maintenance request data is not possible, the maintenance request data is temporarily stored. Additionally, the maintenance interface may cease from closing and/or provide a message to the user of the maintenance interface that data transfer has not been possible. Such message could be a push message on the maintenance device or could be sent via a dedicated email.

Additionally or as an alternative, the maintenance interface might keep on running in the background and try to forward the maintenance request data at regular time intervals.

Additionally or as an alternative, the maintenance interface might be configured to forward the maintenance data upon the next execution of the maintenance interface, that is when the application representing the maintenance interface is run at the next time.

In order to temporarily store the maintenance data, all data may be kept within the maintenance interface location and may only be available for the maintenance interface or the application running the maintenance interface. In order to do so, there may be provided a dedicated database. One example of such a database may be a ultralight database. While the operating system of the maintenance device defines the physical location of the database in the memory, which physical location may be differing from operating system to operating system, the database is exclusively accessible by the maintenance interface. That is the application representing the maintenance interface or containing the maintenance interface is exclusively accessing the database.

The database may be password protected and/or may be encrypted. Preferably, all the data of the maintenance interface will be stored in this database. In other words, preferably all data entered by the user may be stored in the database. The data entered by the user is different from the image captures using as camera module. However, if the image data may be made available to the maintenance e.g. by copying the image file to or (up)loading the image file in the maintenance interface, the image data may be stored in the database. It may be that only the edited image is stored in the database.

The maintenance request data maybe stored in the database. It is possible, that also ticket data is stored in the database. The ticket data may be obtained, e.g. through the service interface, after forwarding the maintenance request data to the data repository. Specifically, should the forwarding be part of the synchronization process, the ticket data may be used when synchronizing with the data repository. However, synchronization may be done by other means and a ticket might not be necessary.

One aspect of the present invention relates to a mobile maintenance device for secure maintenance of at least one refractory metal component of a processing equipment, wherein the mobile maintenance device comprises
- a guided maintenance interface which is adapted to obtain at least one image comprising the at least one refractory metal component;
wherein the guided maintenance interface is adapted to
- irreversibly edit the at least one image by rendering a portion of the image irrecognizable;
- forward maintenance request data including the at least one irreversibly edited image to a data repository remote from the maintenance device;
- receive response data based on the maintenance request data, wherein the response data includes instructions associated with a maintenance action associated with the at least one refractory metal component.

Preferably, the mobile maintenance device is adapted to carry out the computer implemented method as described above. Specifically, the mobile maintenance device may be adapted to carry out these parts, steps, actions of the above described computer implemented method, that are related to the mobile maintenance device.

Preferably, the mobile maintenance device comprises a memory device, wherein a dedicated part of the memory device is accessible by the guided maintenance interface to temporary and exclusively store the at least one image. In other words, parts of the memory of the mobile maintenance device are dedicated to e.g. a camera module and/or a camera application of the mobile maintenance device which again is addressed by the maintenance interface. As an example, this dedicated part of the memory may be volatile memory. Specifically, this dedicated part of the memory may be the cache of the mobile device that may be accessed by the camera module, i.e. the camera cache.

Preferably, the mobile maintenance device is adapted to forward maintenance request data, including the at least one irreversibly edited image and, optionally, the specifier, to the data repository remote from the maintenance device preferably by an encrypted connection.

Another aspect of this invention relates to a computer program product, comprising computer readable instructions, which, when executed by a computer, cause the computer to execute a guided maintenance interface, the guided maintenance interface carrying out the following steps:
- obtaining at least one image comprising the at least one refractory metal component;
- irreversibly editing the at least one image by rendering a portion of the image irrecognizable;
- forwarding maintenance request data including the at least one irreversibly edited image to a data repository remote from the maintenance device;
- receiving response data based on the maintenance request data, including instructions associated with a maintenance action associated with the at least one refractory metal component.

Preferably, the computer program product is adapted such that the maintenance interface stores in a dedicated part of a memory device of the computer, the at least one image. The computer may be a mobile device, such as a smart phone, a tablet, a laptop computer, etc.

Preferably, the computer program product is adapted such that the maintenance interface forwards maintenance request data, including the at least one irreversibly edited image and, optionally, the specifier, to the data repository remote from the maintenance interface via a encrypted connection.

Preferred embodiments of the invention are described below by aid of the enclosed figures showing in
Fig. 1 a view of an exemplary mobile device displaying an exemplary guided maintenance interface, specifically displaying the guided maintenance interface at a specific step;
Fig. 2 a view of an exemplary mobile device displaying an exemplary guided maintenance interface, specifically displaying the guided maintenance interface at a specific step;
Fig. 3 a view of an exemplary mobile device displaying an exemplary guided maintenance interface, specifically displaying the guided maintenance interface at a specific step;
Fig. 4 a view of an exemplary mobile device displaying an exemplary guided maintenance interface, specifically displaying the guided maintenance interface at a specific step;
Fig. 5 a view of an exemplary mobile device displaying an exemplary guided maintenance interface, specifically displaying the guided maintenance interface at a specific step;
Fig. 6 a view of an exemplary mobile device displaying an exemplary guided maintenance interface, specifically displaying the guided maintenance interface at a specific step;
Fig. 7 a view of an exemplary mobile device displaying an exemplary guided maintenance interface, specifically displaying the guided maintenance interface at a specific step;
Fig. 8 a view of an exemplary mobile device displaying an exemplary guided maintenance interface, specifically displaying the guided maintenance interface at a specific step;
Fig. 9 a view of an exemplary mobile device displaying an exemplary guided maintenance interface, specifically displaying the guided maintenance interface at a specific step;
Fig. 10 a view of an exemplary mobile device displaying an exemplary guided maintenance interface, specifically displaying the guided maintenance interface at a specific step;
Fig. 11 a view of an exemplary mobile device displaying an exemplary guided maintenance interface, specifically displaying the guided maintenance interface at a specific step;
Fig. 12 a view of an exemplary mobile device displaying an exemplary guided maintenance interface, specifically displaying the guided maintenance interface at a specific step;
Fig. 13 a view of an exemplary mobile device displaying an exemplary guided maintenance interface, specifically displaying the guided maintenance interface at a specific step;
Fig. 14 a view of an exemplary mobile device displaying an exemplary guided maintenance interface, specifically displaying the guided maintenance interface at a specific step and
Fig. 15 a view of an exemplary mobile device displaying an exemplary guided maintenance interface, specifically displaying the guided maintenance interface at a specific step.

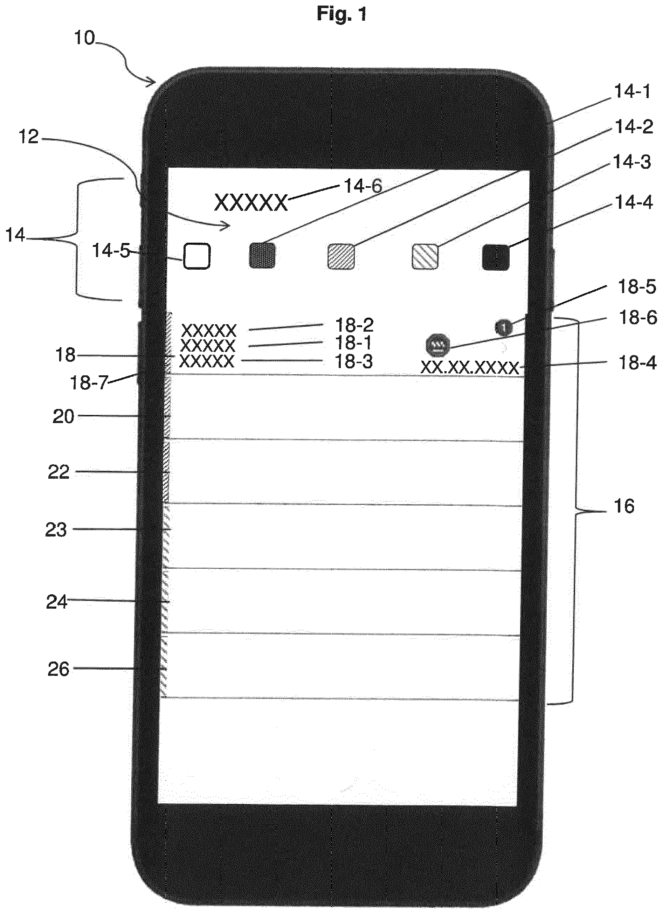

**Figure 1** shows an exemplary view of a mobile device, such as a smartphone as an example of a maintenance device 10, on which the computer implemented method is running. In other words, figure 1 shows a view of the mobile device, in which the guided maintenance interface is active. The guided maintenance interface may have become active upon execution of a corresponding application such as a maintenance application. The guided maintenance interface may be utilized by a maintenance application. The maintenance application may be referred to as computer implemented maintenance application, i.e. may be software running on the maintenance device. Figure 1 shows what is referred to as a home screen or a home view of the maintenance interface. The maintenance interface may be a graphical user interface (GUI) or a GUI may be the visual front end of the maintenance interface.

The home screen 12 shown in figure 1 has various fields. In this exemplary view, the home screen 12 has various portions. Home screen 12 has a header portion 14 and a notifications portion 16. The notifications portion 16, in this example, comprises six notifications 18, 20, 22, 23, 24, 26. Advantageously, the header portion 14 may comprise a label or title 14-6, such as e.g. "Notifications", for labelling the content of the corresponding notifications portion 16.

Notification 18 in this view shows specifier 18-1. In this example, the specifier 18-1 specifies a dedicated machine by code "VR 14-2". In addition, notification 18 comprises additional data 18-2 which is a short title used for the notification as well as additional data 18-3, which is a ticket number. Further, there is provided additional data 18-4, which is the date of the notification or which may be the date of the last action in this notification. In addition there is provided additional data 18-5, which may be the number of messages exchanged for this notification with the service interface as well as additional data 18-6 which is an item showing the status of the progress of the notification.

Further, notification 18 comprises additional data 18-7, which can be a color coded bar on the left side of the notification. It is understood that color coding is one example for the grouping and identification described in this application. For the sake of visualization, in the figures, instead of colors, hatchings are used. The color coded bar could consist of various colors, namely, as examples, red, orange, green and black. These colors are reflected in the header portion 14. The header portion 14 shows various colored squares or boxes, wherein red colored box 14-1 (shown as dotted box) relates to the count of open maintenance requests, orange colored box 14-2 (shown as narrowly hatched box) relates to the count of pending maintenance requests, green colored box 14-3 (shown as wide hatched box) relates to the count of concluded maintenance requests, black box 14-4 relates to the count of archived maintenance requests and white box 14-5 relates to the count of all maintenance requests.

While for this description of Figure 1 the term notification has been used, alternatively, notifications 18, 20, 22, 23, 24 or 26 might also be referred to as maintenance request 18, 20, 22, 23, 24 and 26. For the sake of completeness, only maintenance request/notification 18 has been shown with detailed information in figure 1 and has been described in detail in this application. While not shown with such details and not described at that level of detail, the description concerning maintenance request/notification 18 can also be applied to maintenance requests/notifications 20, 22, 23, 24 and 26. The specific content of maintenance requests/notifications 18, 20, 22, 23, 24 and 26 may differ.

The information in maintenance requests 20, 22, 23, 24, 26 is similarly structured as the one described with maintenance request 18.

From the home screen, each maintenance request 18, 20, 22, 23, 24, 26 may be accessed by touching the area on touchscreen or clicking on the area of the interface relating to the maintenance request 18, 20, 22, 23, 24, 26.

A concluded maintenance request can be transitioned to be an archived maintenance request by left sweep on the respective field on the home screen. By doing so, the left-hand side color bar will change from green to black. As can be seen in Figure 1, maintenance requests 18, 20, 22 are pending. Maintenance requests 23, 24, 26 are concluded.

Maintenance request 18 has the additional item 18-6 showing that the processing equipment is in operable and currently ceased processing.

The additional data 18-2 through 18-7 may maintain to be available through the maintenance interface, even after closing the maintenance interface. Also the specifier 18-1 may be available through the maintenance interface even after closing the maintenance interface. In other words, these data may be stored in a dedicated database, such as the slim or ultralight database referred to in the application. Specifically, the specifier 18-1 as well as the additional data 18-2 to 18-7 maybe stored in encrypted form in the additional database. Upon opening the maintenance interface, i.e. upon starting the application providing the guided maintenance interface, these data may be loaded from the database and quickly be available to the user using the guided maintenance interface. It is possible, that data for various maintenance requests is stored. Specifically, Figure 1 identifies six maintenance requests. However, for a different number, such as 5, 8, 10, 12 maintenance requests, the additional data, as well as the specifier may be stored in a data base.

It is preferred that all the images that are captured, that is all irreversibly edited images as well as unedited images, are deleted upon aborting the method and/or upon closing the guided maintenance interface, specifically upon closing the application providing the guided maintenance interface, and/or by using the specific delete command initiated by pushing a corresponding button, such as delete button 64 as described later. Alternatively, it is possible that unedited images and/or irreversibly edited images may be stored in the above-mentioned database specifically in an encrypted fashion. In order to do so, the image files are stored in the database. Nevertheless, the camera cache, initially holding the image, that is the unedited image(s) or the irreversibly edited image(s), is nevertheless cleared, upon forwarding the maintenance request data, and/or upon closing of the maintenance interface, and/or by selecting a dedicated button.

While editing the image, it is possible to undo specific editing steps. However, after concluding the editing, the specific edits are stored in the image file, that is, the original image file is overwritten to include the edits. After that, no edits can be undone, since the pixel values in the image files have been altered.

The captured image can be in any conventional format, such as PMG, JPG, HEIF, etc.

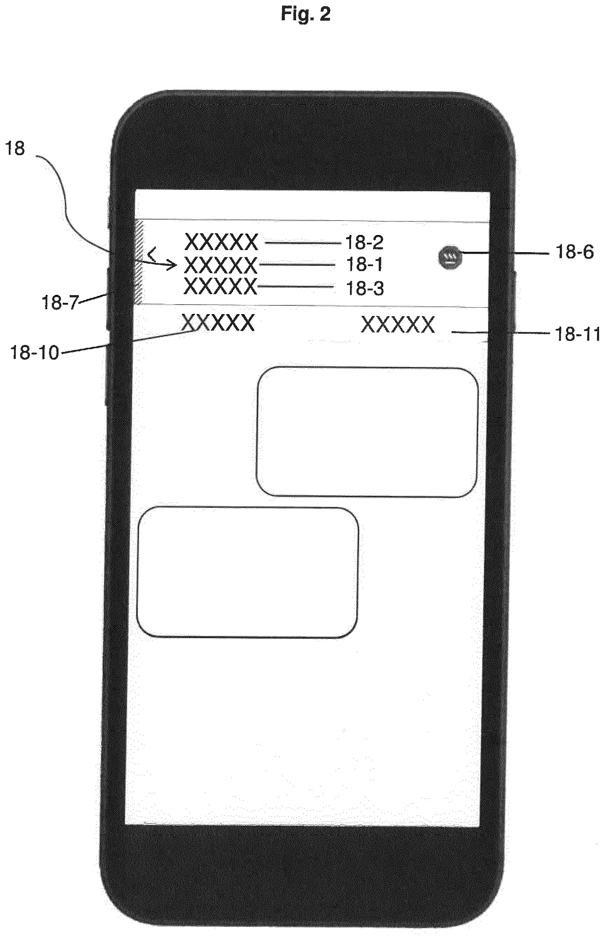

**Figure 2** is a view when activating or accessing maintenance request 18. As can be seen, when accessing maintenance request 18, two folders will be available. One folder referenced as chat 18-10 and one as maintenance request details 18-11. The folder chat 18-10 allows interaction with e.g. a service personal, service technician, technical support personal, etc. at service interface.

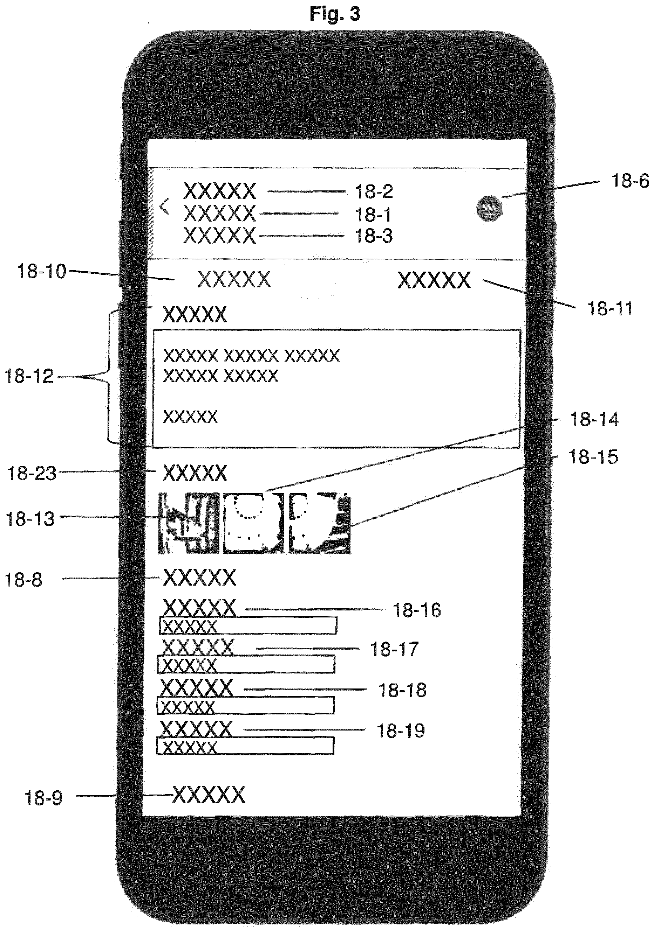

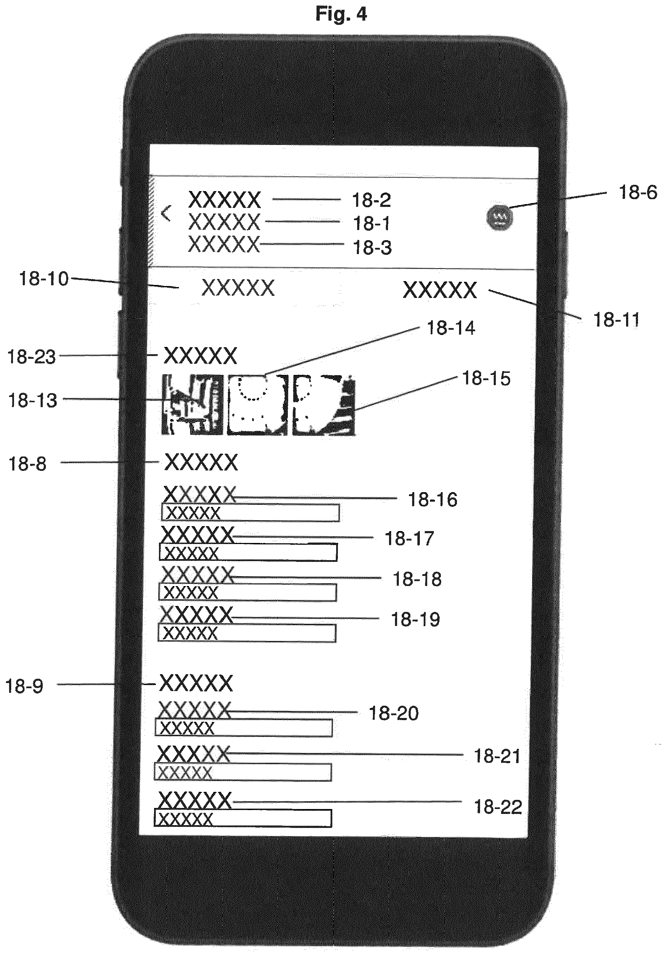

**Figure 3** shows the top of the folder maintenance request details 18-11. In short, folder maintenance request details 18-11 contains maintenance request data. As an example, maintenance request data contains additional data 18-12 being a short text, irreversibly edited images 18-13, 18-14, 18-15, further additional data 18-16, 18-17, 18-18, 18-19 containing an approximate value of process temperature 18-16, a category of the reason for the maintenance request, in this example being damage 18-17, information whether processing equipment ceased working 18-18, in this example affirmed, and whether a phone call is requested 18-19, in this example affirmed. Advantageously, the section for displaying the further additional data 18-16, 18-17, 18-18 and 18-19 may comprise a title 18-8, such as e.g. "basic data". Further advantageously, the folder maintenance request details 18-11 might also comprise a title 18-9 such as e.g., "optional data" for labelling a section for displaying further optional data (shown in Fig.4). Further advantageously, the folder maintenance request details 18-11 might also comprise a title 18-23 such as e.g., "images" for indicating a subsequent section containing irreversibly edited images, such as the exemplary illustrated irreversibly edited images 18-13, 18-14 and 18-15.

**Figure 4** shows additional information when scrolling down on the folder maintenance request details 18-11. In this example, an indication of which part of the processing equipment is effected is shown as additional data 18-20, an indication of what materials are used is provided as additional data 18-21 and a chemical atmosphere which is used for processing is provided as additional data 18-22.

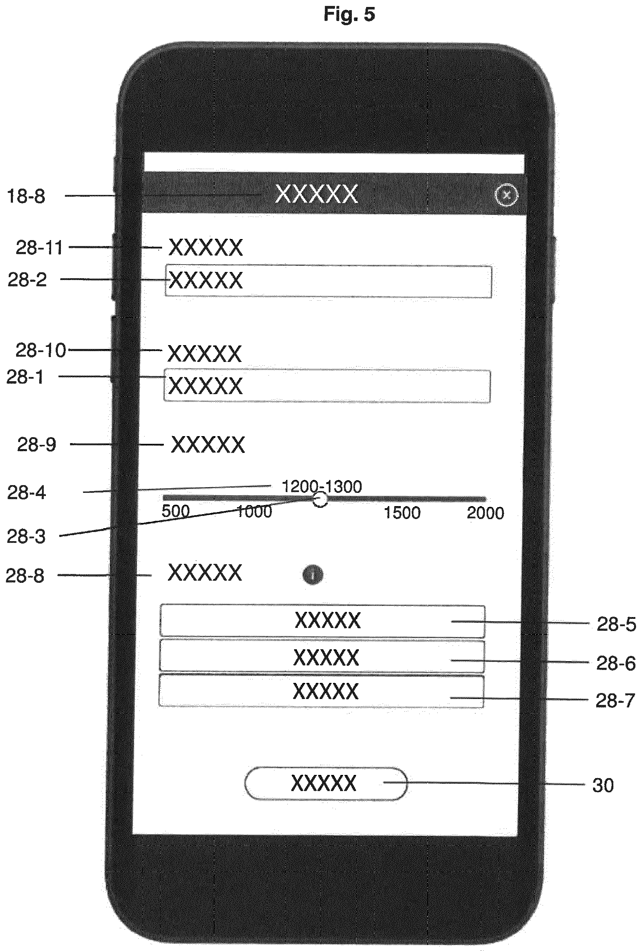

**Figure 5** shows first screen or view for establishing a maintenance request. The first screen or view for establishing a maintenance request may have a title 18-8 identical to the title 18-8 for labelling the section for displaying the further additional data 18-16, 18-17, 18-18 and 18-19, as exemplarily illustrated by Figure 4. The title may therefore also read e.g. "basic data". As a result of establishing a maintenance request, for example a field in the home screen is added similar to maintenance request field 18. Figure 5 shows how the optional information referenced above as additional data is provided. Specifically, a specifier 28-1 is entered in a provided field. Advantageously a title 28-10, such as e.g. "Unit identification", may be used for labelling specifier 28-1. A short title for the maintenance request being additional data 28-2 is entered in the corresponding field. Advantageously a title 28-11, such as e.g. "*Notification title", may be used for labelling specifier 28-2. Further, an approximate processing temperature can be provided by a slider bar 28-3 as additional data 28-4. Advantageously a title 28-9, such as e.g. "process temperature (°C)" may be used for labelling the slider bar 28-3.ln addition, the nature of the maintenance request can be provided by means of select fields 28-5, 28-6, 28-7. Advantageously a title 28-8, such as e.g. " *Notification category", may be used for labelling the section displaying select fields 28-5, 28-6, 28-7. For example select field 28-5 indicates the nature of the maintenance request that is to notify and indicates a damage of the processing equipment. Select field 28-6 indicates that consulting support is requested. Select field 28-7 indicates that photo documenting will be provided.

It is possible, that as part of the guided maintenance interface, one or more of the additional data can be mandatory data. In this example, title 28-2 as well as category of the maintenance request 28-5, 28-6, 28-7 are mandatory information. In other words, in order to move to the next view of the maintenance interface by selecting next button 30, at least the additional data 28-2 being the title of the maintenance request as well as either one of select fields 28-5, 28-6, 28-7 categorizing the maintenance request, will be necessary, in order to move to the next view/next screen of the guided maintenance interface.

The following categories for maintenance request may be identified: Damage 28-5 should be used for requesting maintenance concerning problems or cease of work of high temperature thermal processing equipment, exchange information and discussion with experts or analysis, suggestions and advice.

Counseling 28-6 should be used for requesting advice for exchange and maintenance of components, preventive discussion, analysis and opinion on monitoring, tips and tricks by experts, maybe preventive consulting and/or consulting for altering of spare parts.

Photo documentation 28-7 should be used for monitoring of status and wear of components of processing equipment, long time monitoring of processing equipment and also typical defect monitoring, duration updates, service suggestions and exchange of information with experts.

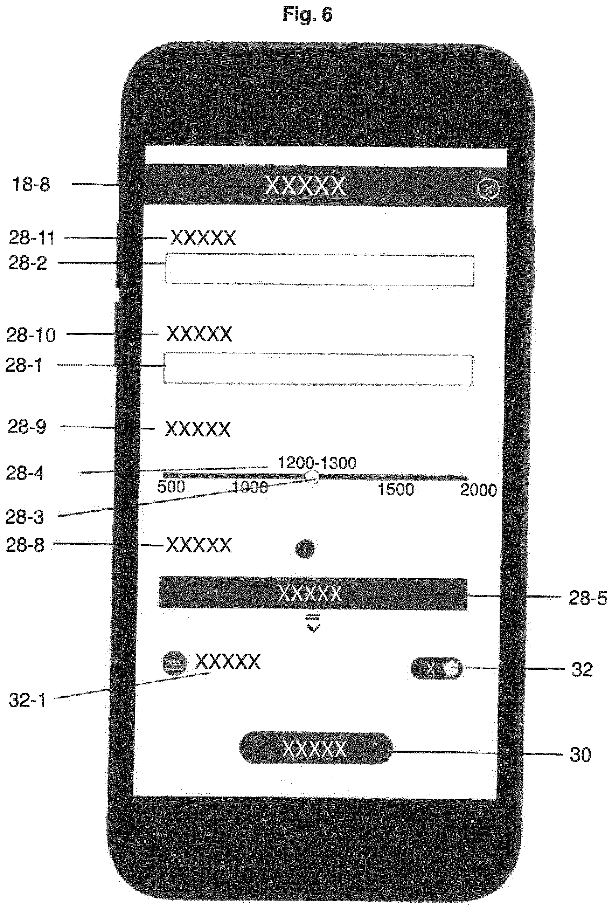

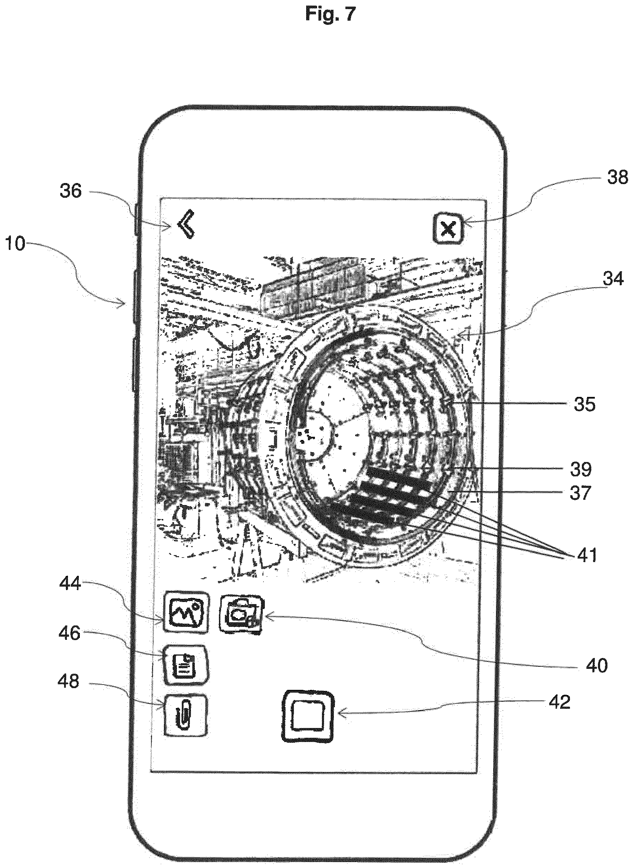

**Figure 6** is a detailed view of Figure 5 upon selecting select field 28-5 that a damage of the processing equipment has occurred. In this example, the guided maintenance interface requires additional information being input by slider button 32 which can be selected to provide the information whether the processing equipment ceased working or not. Advantageously a title 32-1, such as e.g. "Standstill of the unit?", may be used for labelling the section comprising the slider button 32. Once all this information is provided, the color of the select button 30 changes and it can be activated. By activating the select button 30, the next view/screen of the guided maintenance interface is provided which can be seen in Figure 7.

**Figure 7** shows the interface allowing to capture one or more images of the processing equipment 35 and/or the refractory metal component. As can be seen in Figure 7, the maintenance device respectively mobile device 10 shows in its display an image 34 that is obtained through the camera module (not shown) of the mobile device 10. The screen shows back arrow 36 as well as close button 38. By selecting the back arrow 36, the user may change the view back to the previous view shown in Figure 6 or even the previous view shown in Figure 6.

Image 34, for example, shows an overview of a thermal processing equipment 35. According to this example, the thermal processing equipment 35 may comprise housing 37 and refractory metal components 39 arranged within the housing. In addition classified elements 41 may be arranged in the housing 37. The classified elements 41 may be products to be produced in the thermal processing equipment 35.

By selecting the close button, the maintenance interface will be closed and the maintenance method will be aborted.

In addition, the maintenance interface contains a number of icons. There is a current image item 40 which is a small scale view or preview of the latest picture that is taken when activating take image button 42.

Simply put, image 34 is the real time view of the image captured by the camera on module of a mobile device 10. When activating take image button 42, the real time view will be captured as still image and the current image symbol is shown in the maintenance interface. In addition one or more previously taken image symbols 42 can be shown as well as an upload process log files button 46 and an attach images and documents button 48.

Previously captured image symbol 44 could be a small view of a previously captured irreversibly edited image, i.e. preview images of a previously captured irreversibly edited image.

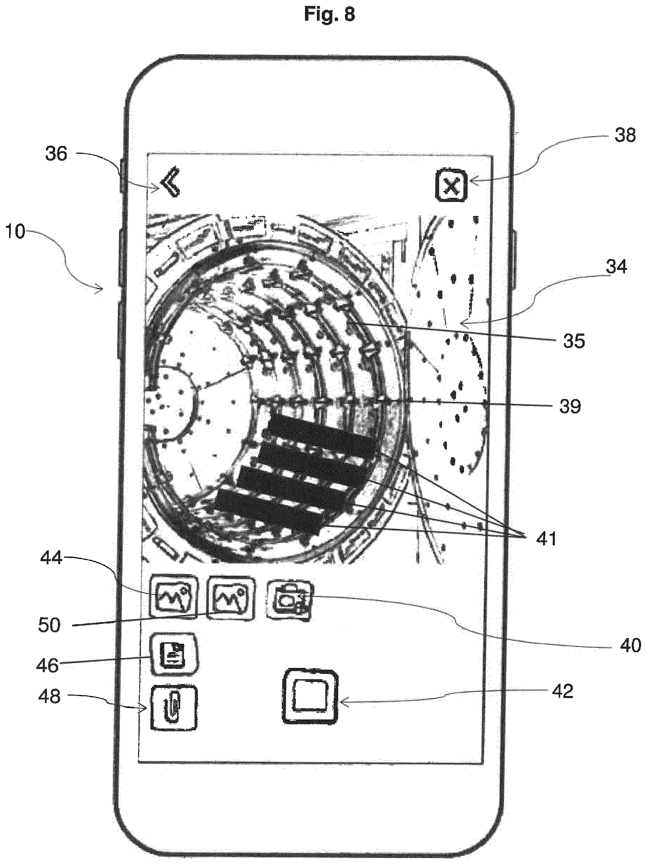

**Figure 8** shows another view of the maintenance interface, wherein an additional image has been captured. Thus, figure 8 shows a more detailed view of the thermal processing equipment 35 as shown in Figure 7.

As can be seen there is an additional icon 44 for the previously taken/captured image, as already was shown in 7. There is an icon 50 for previously captured image that reflects the image captured in Figure 7. In addition, there is the current image symbol which represents the image 34 that is the real time view of camera module.

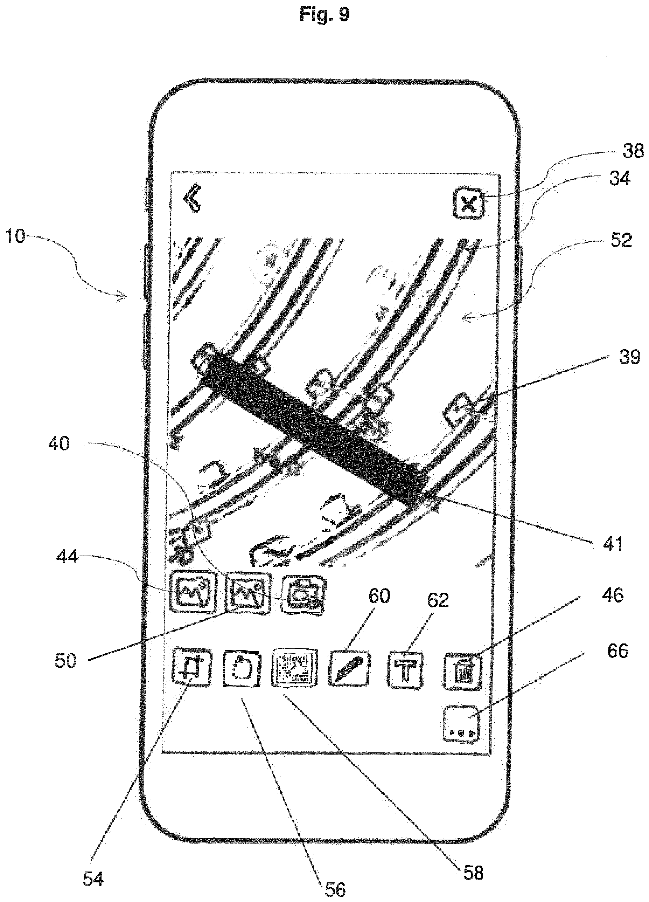

**Figure 9** shows a detailed view once an image has been obtained through the maintenance interface by activating capture image button 42. Thus, figure 9 shows a further detailed view of the thermal processing equipment 35, specifically of the refractory metal components 39 as well as the classified elements 41.

By selecting capture image button 42, the real time view obtained through the camera module will be stored in the camera cache as still image. This still image is shown as image 52 in Figure 9.

Once the capture image button has been activated, and the image 52 has been captured, the view of the maintenance interface changes. While the previously taken images previews 44, 50 as well as the current image symbol 40 maintain, instead of the capture image button 42, a number of image editing buttons are provided. In Figure 9 there are provided crop button 54, rotate button 56, haze button 58, marking button 60, text button 62 and delete button 64.

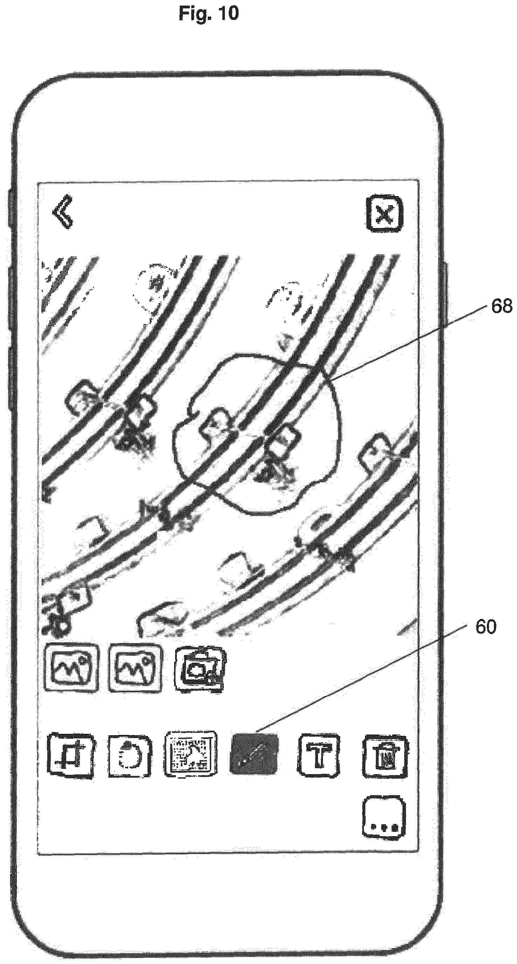

Utilizing buttons 54 - 62, the image can be irreversibly edited. Button 64 may be used for deleting the image as captured or the irreversibly edited image. Button 66 may allow to access further editing buttons/functionalities. **Figure 10** shows a view of the user interface, once the mark button 60 has been activated which allows marking 68 to be applied to the image, thereby irreversibly editing the image.

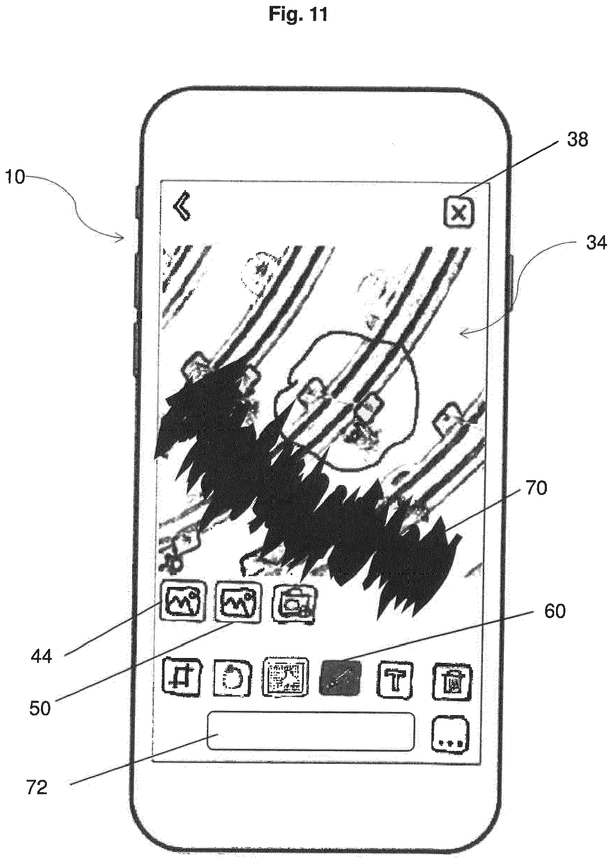

**Figure 11** is a further view of the maintenance user interface with activated mark button 60 which has been used to blacken out parts of the image by applying redacting marks 70. Using redacting mark 70, portions of the image 34, which contain classified elements, such as components produced in processing equipment 35 can be rendered irrecognizable. Specifically, the classified elements 41 have been redacted such that the classified elements 41 are no longer visible.

Since the maintenance interface directly alters the image file that is temporarily stored in the camera cache, once the editing is done, e.g. by deselecting mark button 60 and/or by selecting close button 38 and/or by a right sweep on the image, image 34, including all the edits, is saved, thereby transitioning from image 34 to irreversibly edited image 34. Since for each pixel a color code is altered and saved, and since particular no table of changes is saved, this change is irreversible, i.e. the change cannot be undone.

Items 44 and 50 are previews of already captured and edited image, that is items 44 and 50 are previews of irreversibly edited images. Once close button 38 or according to a different embodiment, next button 72 is activated, guided maintenance interface moves to the next view.

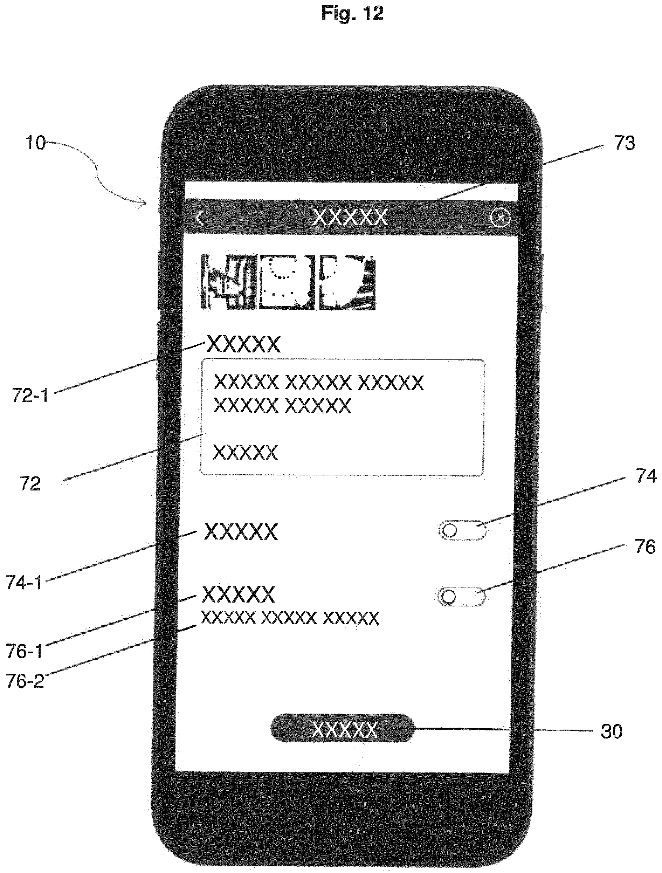

According to this embodiment, and as shown in **Figure 12** additional data can be provided. The view illustrated by Figure 12 may provide a title 73 such as e.g. "Notification description" for labelling the subsequent section. According to this embodiment, message field 72 allows entering a short text message. Advantageously, a title 72-1 such as e.g. "Notification description/ question" may be provided for labelling message field 72. According to this specific embodiment, providing this short text message as an example of additional data, is mandatory. It may as well be optional to provide this short text message. In addition, as can be seen in Figure 12, two optional buttons are included, which may allow to request for being called back (button 74) or to provide additional data (button 76). Advantageously, a title 74-1 such as e.g. "Callback desired?" may be provided for labelling button 74. Further advantageously, a title 76-1 such as e.g. "Optional information" may be provided for labelling button 76. Further to the title 76-1, a sub-title 76-2 such as "Affected area, materials, atmosphere/gases" may be provided for indicating further information about the title 76-1.

The service interface may be utilized by the manufacturer of the processing equipment or by the manufacturer of the refractory metal component. A technician of the processing equipment manufacturer may review the images as well as the additional data and the specifier. The service technician may confirm, that the images provided correlated with the specifier. The service technician may indicate that the specifier correctly identifies the device/equipment and/or the components, specifically refractory metal component shown in the images. Service technician may analyze the situation and identify the condition of processing equipment and/or the refractory metal component(s). For example, the service technician may identify, that one or more of the refractory metal components show wear, that they are not properly installed in the processing equipment, that for example an isolation has melted, etc. Service technician may also identify, that this is typical wear and that device should be up and running. The service technician, in case of a defect, may provide suggestions how to repair and restart the processing equipment. This may include questions for spare parts, that have to be ordered. All this information will be provided to the user as maintenance response data by using the maintenance interface.

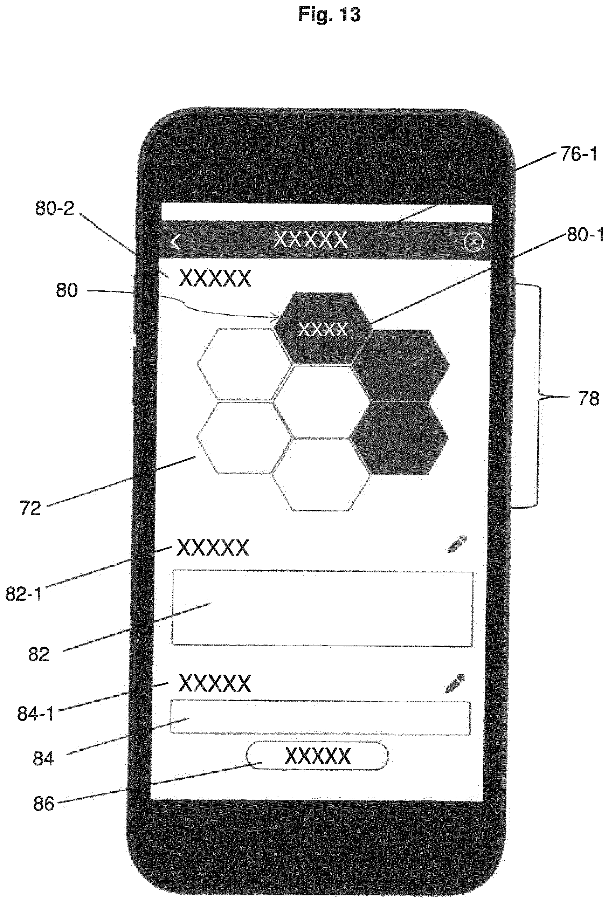

**Figure 13** shows a view of the guided maintenance interface when additional data button 76 is activated. The view illustrated by Figure 13 may therefore provide a title 76-1 identical to title 76-1 for labelling button 76 as illustrated in Figure 12. The title 76-1 as illustrated in figure 13 may therefore also read e.g. "Optional information". When activating additional information button 76, guided maintenance interface in portion 78 provides for manual input of various areas, to which the maintenance request may relate. This can be done by simply highlighting one or more of tiles 80. The one or more tiles 80 might each comprise a title 80-1 such as e.g. "electrics" for labelling a corresponding tile 80 in order to indicate an area to which the request may relate. Advantageously a title 80-2 such as e.g. "Affected area" may be provided for labelling the section comprising the one or more tiles 80. In addition, text input field 82 allows to input text relating to the materials used and text input field 84 allows to introduce in which chemical environment the process takes place. Advantageously, a title 82-1 such as e.g. "Materials (charge material/ heating insert)" may be provided for labelling text input field 82. Further advantageously, a title 84-1 such as e.g. "Atmosphere/gases" may be provided for labelling text input field 84.

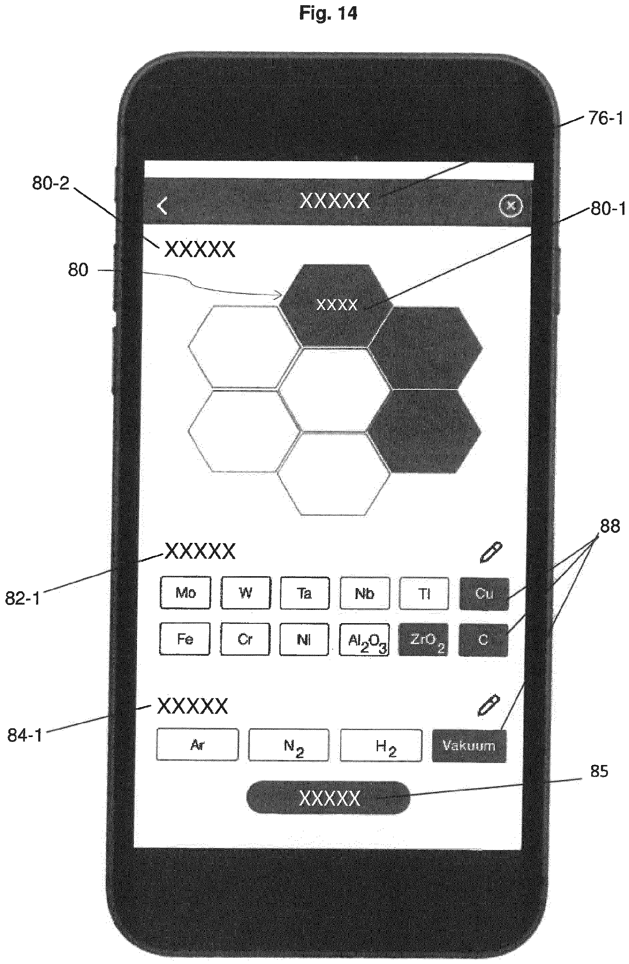

By selecting the next button 86, the guided maintenance interface allows to instead of using text input fields 82, 84 select materials and gases using prefilled-in buttons 88, as can be seen in **Figure 14**.

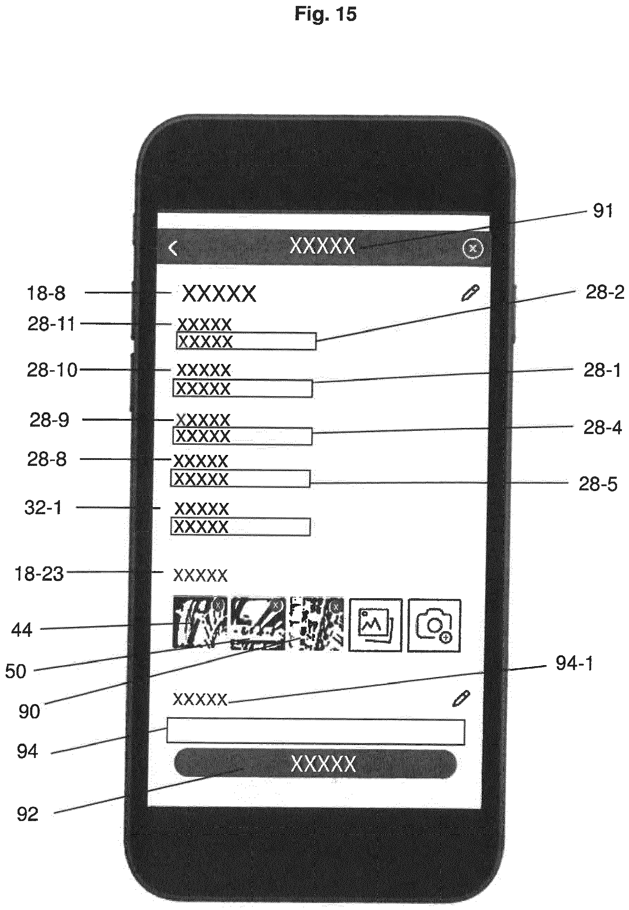

When selecting next button 85, guided user interface provides the user with the final view as shown in **Figure 15**, which gives an overview of the data entered, particularly including image preview 44, 50 and e.g. 90. Advantageously, the final view as illustrated by Figure 15 may provide a title 91 such as e.g. "Data verification" for labelling the final view. By selecting send button 92, the guided maintenance interface forwards the irreversibly edited images, as previewed by preview images 44, 50, 90 as well as the specifier 28-1, the additional data 28-2 being a short title, 28-4 being the approximate process data, 28-5 being the category of the maintenance request relating to damage including cease of the processing equipment, data acquired via slider button 32 being information whether the processing equipment ceased working or not, and further additional data 94 being a text message. The text message may be identical to the text message entered in text filed 72 as illustrated by figure 12. Advantageously, a title 94-1 such as e.g. "Notification description" may be provided for labelling the section comprising further additional data 94. Once activating the send button 92, the maintenance request data is forwarded to the data repository. From the data repository, the maintenance request data can be processed through service interface (not shown). The processing can be carried out by a human user who can be using computer devices and a computer programs such as image recognition. Once an image request data has been processed, and a maintenance action to be carried out be identified by the service personal, maintenance response data can be provided. The maintenance response data may comprise instructions, how to repair the damaged processing device. For example, maintenance response data may comprise instructions to replace one of the refractory metal components, an isolation attached to the refractory metal component, etc. of the processing equipment.

The maintenance response data can be provided through chat folder 18-10 as can be seen in Figure 2. The maintenance response data may be detailed instructions. The maintenance data may be a symbol representing the initiation of a phone call or indicating, that a machine is in good order.

### List of Reference Numerals

- 10: mobile device, respectively maintenance device
- 12: homescreen
- 14: header portion
- 14-1: count open maintenance request
- 14-2: count pending maintenance request
- 14-3: count concluded maintenance request
- 14-4: count archived maintenance request
- 14-5: count all maintenance request
- 14-6: title
- 16: notifications portion
- 18: notification/maintenance request-field
- 18-1: specifier
- 18-2: additional data
- 18-3: additional data
- 18-4: additional data
- 18-5: additional data
- 18-6: additional data
- 18-7: additional data
- 18-8: title
- 18-9: title
- 18-10: chat
- 18-11: maintenance request details
- 18-12: additional data
- 18-13: irreversibly edited image
- 18-14: irreversibly edited image
- 18-15: irreversibly edited image
- 18-16: additional data
- 18-17: additional data
- 18-18: additional data
- 18-19: additional data
- 18-20: additional data
- 18-21: additional data
- 18-22: additional data
- 18-23: title
- 20: notification
- 22: notification
- 23: notification
- 24: notification
- 26: notification
- 28-1: specifier
- 28-2: additional data
- 28-3: slider bar
- 28-4: additional data
- 28-5: select field
- 28-6: select field
- 28-7: select field
- 28-8: title
- 28-9: title
- 28-10: title
- 28-11: title
- 30: next button
- 32: slider button
- 32-1: title
- 34: image
- 35: processing equipment
- 36: back arrow
- 37: housing
- 38: close button
- 39: refractory metal components
- 40: current image symbol
- 41: classified elements
- 42: take image button
- 44: previously captured image preview
- 46: upload process log files button
- 48: attach images and log files button
- 50: previously captured image preview
- 52: image
- 54: crop button
- 56: rotate button
- 58: haze button
- 60: mark button
- 62: test button
- 64: delete button
- 66: button
- 68: marking
- 70: redacting marks
- 72: message field
- 72-1: title
- 73: title
- 74: button
- 74-1: title
- 76: button
- 76-1: title
- 76-2: subtitle
- 78: portion
- 80: tile
- 80-1: title
- 80-2: title
- 82: text input field
- 84: text input field
- 84-1: title
- 86: next button
- 88: pre filled in button
- 90: previously captured image preview
- 91: title
- 92: send button
- 94: text message
- 94-1: title

## Claims

1. Computer implemented method for secure maintenance of at least one refractory metal component (39) of a processing equipment (35) comprising the steps:
- starting a guided maintenance interface on a maintenance device (10);
- obtaining at the guided maintenance interface at least one image (34) comprising the at least one refractory metal component (39);
- irreversibly editing through the guided maintenance interface the at least one image (34) by rendering a portion of the image (34) irrecognizable;
- forwarding by the guided maintenance interface, maintenance request data including the at least one irreversibly edited image (34) to a data repository remote from the maintenance device;
- processing the forwarded irreversibly edited image (34) through a service interface to identify a condition associated with the at least one refractory metal component (39);
- depending on the identified condition, initiating a maintenance action associated with the at least one refractory metal component (39).

2. Computer implemented method according to claim 1, comprising the additional step of obtaining, at the guided maintenance interface, a specifier (18-1, 28-1) associated with the at least one refractory metal component (39) of the processing equipment (35).

3. Computer implemented method according to claim 1 or 2, wherein the step of obtaining the least one image (34) comprising the at least one refractory metal component (39) and/or the step of irreversibly editing the at least one image (34), and/or the step of obtaining the specifier (18-1, 28-1) is/are carried out manually by a user of the maintenance device (10).

4. Computer implemented method according to one or more of the previous claims, wherein the at least one image (34) is obtained by a camera module of the maintenance device (10) and wherein the at least one image (34) is temporarily stored in a dedicated memory, preferably, wherein the least one irreversibly edited image (34) is temporarily stored in the dedicated memory.

5. Computer implemented method according to one or more of the previous claims, wherein the at least one image (34) is edited by overwriting, in the dedicated memory, the source code of the image (34).

6. Computer implemented method according to one or more of the previous claims, wherein the step of forwarding the maintenance request data is indispensably executed upon closing the guided maintenance interface and/or wherein the step of forwarding the maintenance request data is indispensably executed upon a user executed command.

7. Computer implemented method according to one or more of the previous claims, further comprising the indispensable step of deleting the at least one irreversibly edited image after forwarding the maintenance request data and/or upon closing the maintenance interface and/or upon a user executed command.

8. Computer implemented method according to one or more of the previous claims, wherein the condition comprises a defect of the at least one refractory metal component and/or a defect of the processing equipment.

9. Computer implemented method according to one or more of the previous claims, further comprising the step of receiving, at the maintenance device (10), maintenance response data including instructions associated with the maintenance action, wherein, optionally, the maintenance action comprises a corrective action for the at least one refractory metal component (39) and/or a corrective action for the processing equipment (35).

10. Computer implemented method according to one or more of the previous claims, wherein the maintenance request data are forwarded to the data repository via an encrypted connection and/or utilizing an encrypted method and/or utilizing encrypted data.

11. Computer implemented method according to one or more of the previous claims, wherein, through the service interface, the at least one refractory metal component (39) and/or the processing equipment (35) is identified and/or the identity of the at least one refractory metal component (39) and/or the processing equipment (35) is confirmed.

12. Computer implemented method according to one or more of the previous claims, further comprising the step of obtaining, through the guided maintenance interface, additional data (18-2, 18-3, 18-4, 18-5, 18-6, 18-7, 18-12, 18-16, 18-17, 18-18, 18-19, 18-20, 18-21. 18-22) associated with the image (34), wherein the additional data (18-2, 18-3, 18-4, 18-5, 18-6, 18-7, 18-12, 18-16, 18-17, 18-18, 18-19, 18-20, 18-21. 18-22) is textual data and/or voice recorded data, specifically wherein the additional data is free of any image data and/or movie data and/or data showing classified elements and wherein the maintenance request data include the additional data.

13. Computer implemented method according to one or more of the previous claims, wherein, if a data connection between the maintenance device (10) and data repository is interrupted at the time of executing the step of forwarding the maintenance request data, the maintenance request data is automatically forwarded, as soon as the data connection between the maintenance device (10) and the data repository is re-established and wherein, optionally, the maintenance request data is encrypted and temporarily stored in the memory of the maintenance device (10).

14. Mobile maintenance device (10) for secure maintenance of at least one refractory metal component (39) of a processing equipment (35), wherein the mobile maintenance device (10) comprises
- a guided maintenance interface which is adapted to obtain at least one image (34) comprising the at least one refractory metal component (39);
wherein the guided maintenance interface is adapted to
- irreversibly edit the at least one image (34) by rendering a portion of the image (34) irrecognizable;
- forward maintenance request data including the at least one irreversibly edited (34) image to a data repository remote from the maintenance device (10);
- receive response data based on the maintenance request data, wherein the response data includes instructions associated with a maintenance action associated with the at least one refractory metal component (39).

15. Computer program product comprising computer readable instructions, which, when executed by a computer, cause the computer to execute a guided maintenance interface, the guided maintenance interface carrying out the following steps:
- obtaining at least one image (34) comprising the at least one refractory metal component (39);
- irreversibly editing the at least one image (34) by rendering a portion of the image (34) irrecognizable;
- forwarding maintenance request data including the at least one irreversibly edited image (34) to a data repository remote from the maintenance device (10);
- receiving response data based on the maintenance request data, including instructions associated with a maintenance action associated with the at least one refractory metal component (39).
